# EUROPEAN PATENT SPECIFICATION

(11) **EP 1 970 817 B1**
(45) Date of publication and mention of the grant of the patent: **26.10.2011**
(21) Application number: 08102517.3
(22) Date of filing: 12.03.2008
(51) Int. Cl.: G06F 13/42

(54) **Method and circuit for expanding ports**
Verfahren und Schaltung zur Porterweiterung
Procédé et circuit pour étendre les ports

(30) Priority: 16.03.2007 TR 200701649
(43) Date of publication of application: 17.09.2008
(73) Proprietor: Vestel Elektronik Sanayi ve Ticaret A.S., 45030 Manisa (TR)
(72) Inventor: Yilmazlar, Ismail, 45030, Manisa (TR)
(74) Representative: Cayli, Hülya

(56) References cited:
- DE-A1- 3 719 713
- US-A1- 2006 047 866
- PHILIPS SEMICONDUCTORS: "DATA SHEET PCF8575 Remote 16-bit I/O expander for I2C-bus" 7 April 1999 (1999-04-07), PHILIPS , XP002509589 * the whole document *

## Description

### Technical Field

The present invention relates to controlling more than one output ports in a system from a single port by making use of PWM (pulse width modulation) signals, and to solving the inadequate port problem by means of an inexpensive method.

### Background of Invention

Within electronic systems controlled by microprocessors, various devices connected to the system are controlled by the microprocessors in order to have them activated or deactivated. Nowadays systems such as TVs, DVDs, DVBs, etc. can support relatively more features, causing an increase in the number of integrated circuits employed. The GPIO (General Purpose Input/Output) ports available in a system are typically controlled by more than one microprocessor ports. If such microprocessor ports are inadequate, some integrated circuits named as "port expanders" are used, in order to control more GPIO ports in the system are being utilized from. Even in these conditions, the number of controlled GPIO ports may be insufficient.

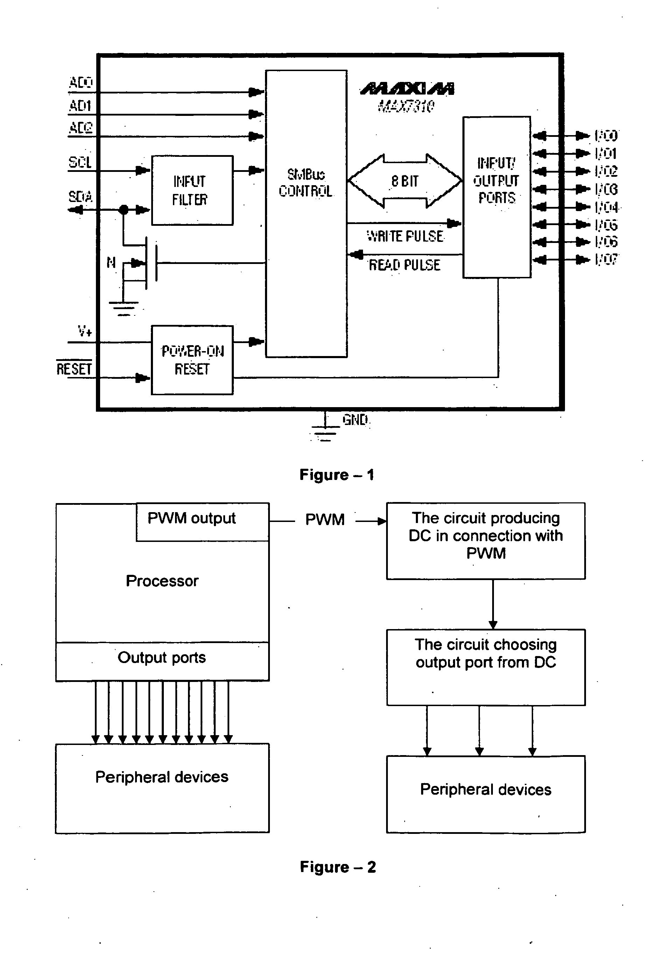

Known port expanding integrated circuits are generally controlled by more than one microprocessor port; where the data on which the port is to be activated by the microprocessor is sent to port expanding integrated circuits controlled by microprocessors, whereby more than one microprocessor controlling more than one GPIO port is used for this purpose. For instance whilst the AD0, AD1, AD2 addressing ports in the port expanding circuit as illustrated in Figure 1 select the port address, the ports to be activated are determined by means of a data bus, where; 3 microprocessor ports can control 8 GPIO ports within those integrated circuit. The Patent US5060134 can be given as an example of the relevant prior art; nevertheless, here are assigned more than one microprocessor port to control more than one GPIO ports.

According to the mentioned system in the patent application with publication number US 2006/047866 A1, a computer system is provided in which a central processing unit (CPU), a memory and a peripheral are connected to a common system bus and which includes a direct memory access control circuit (DMAC) for controlling data transfer between the memory and the peripheral or between a first area and a second area within the memory by using the system bus without involving the CPU in accordance with an instruction from the CPU. The computer system also includes a variable pulse generation unit, connected to the system bus, for generating a pulse signal having a period and a pulse width that are specified by the CPU. In the said computer system, the DMAC is arranged to control the data transfer between the first and second areas within the memory in accordance with the pulse signal generated by the variable pulse generation unit. The patent US047866 can be given example of the relevant prior art; however, the PWM signal does not control the transfer rate of the DMA controller by altering a current level, instead the timing of the PWM signal directly controls the behaviour of the DMA controller.

### Objective of Invention

The objective of the present invention is to control a plurality of GPIO ports connected to an electronic system by making use of a single port of a microprocessor within an electronic system.

### Brief Description of Figures

Figure 1 is an example of the relevant prior art.
Figure 2 is a diagram drawn for the present invention.
Figure 3 is an illustrative application of the present invention.
Figure 4 is a diagram representing the duty cycle change and port relationship.

Some terms in the Figures are defined as following:
V1 PWM port: Pulse width modulation signal generator
V2: Power supply generating 3.3 Volt constant voltage
Q (1-6): transistor
C (1-6): capacitor
R (1-17): resistor
DC: direct current
Port: connection point, the point where-in/-from data is in- and output.

### Description of Invention

The present invention is summarized diagrammatically in Figure 2. A pulse width modulation (PWM) source within a microprocessor is used in the system (microprocessor) to control more than one GPIO port. By means of pulse width modulation source, it becomes possible to control the duty cycle outputs generated by the system, whereas direct current (DC) at various levels can be produced by means of such controlled duty cycle. This PWM within microprocessor is controllable by the microprocessor's software, where; the duty cycle of the pulse width modulation source's output is alterable. Since the direct current values obtained with the pulse width modulation will not display any instant changes, the ports according to the present invention must be selected so that they will open and close in sequence. By making use of the pulse width modulation signal obtained, direct current at various levels are generated. As the duty cycle of the pulse width modulation changes, the direct current generated within the system varies. The state of GPIO port can be changed as high (high-logical 1) or low (low logical 0) according to the pulse width modulation high-low time and the direct current level controlled by the microprocessor. The need for the ports which are used as GPIO by the microprocessor or other integrated circuits are decreased so that free general purpose ports (GPIO) become usable for other purposes.

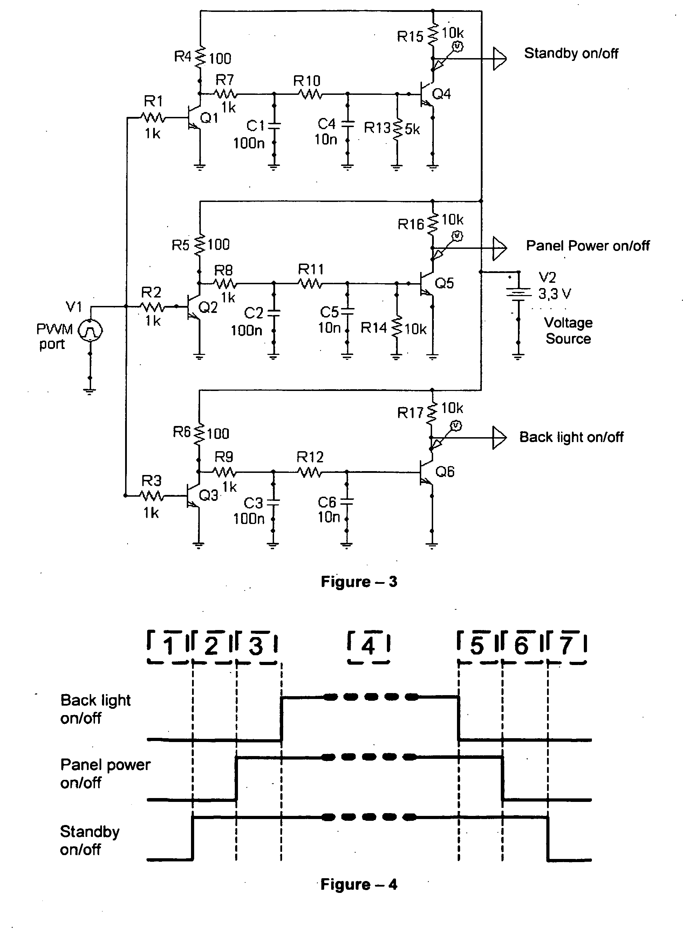

An exemplary circuit is drawn in Figure 3 to illustrate the present invention.

According to the present invention, as shown in Figure 3, an assigned output of a microprocessor within a TV set is used to control more than one component connected to itself by means of a port controller.

Within the system described in Figure 3, three exemplary ports that are controlled in sequence by a port controller when the TV set is turned on: standby on/off, panel power on/off, backlight on/off ports.

In the circuit of Figure 3 where the present invention is illustrated, the part PWM indicates a source by which a pulse width modulation signal is generated. This source is typically a pulse width modulation generator within the microprocessor itself. The circuit components Q1, R1, R4, R7, C1 are positioned between the standby on/off and the PWM source, the circuit components Q2, R2, R5, R8, C2 are positioned between the panel power on/off and the PWM source, whereas the circuit components Q3, R3, R6, R9, C3 are located between the backlight on/off port and the PWM source. One of the reasons that these circuit components are placed between the PWM source and the ports is to prevent those output ports from drawing over-current from the PWM source and to avoid a possible damage to the line where the PWM signal is transferred; the other reason is to change the direct current (DC) value within the port controller.

The maximum value of the port where the PWM source is connected is 3.3 V, with the minimum value being 0. In theory, the duty cycle of the PWM source may be realized at 256 different levels when 8-bit data is used, but this cannot be achieved in practice due to the tolerances of the circuit components used.

In order to switch the transistors illustrated as Q1, Q2, Q3, Q4, Q5 and Q6 in Figure 3 to transmission, a certain voltage level must be formed in their bases. In the circuit wherein the present invention is illustrated in Figure 3, the manner how the outputs are controlled according to the duty cycle of the PWM source in a certain period shall be described in line with the changes in the duty cycle percentages of the PWM source.

### While the duty cycle is 0% at PWM generator port V1:

With respect to this state, since no transmission shall occur to the inputs of transistors Q1, Q2, Q3 within a certain period, and because the threshold level that must be formed in the bases of such transistors to switch them on has not been reached within a PWM duty cycle, the transistors Q1, Q2, and Q3 shall always be closed as the duty cycle of the PWM generator V1 port is 0%(for a specific period). Within this time, the V2 voltage source shall run through the circuit components R4-R7, R5-R8, and R6-R9 resistors in sequence (as illustrated in Figure 3) and fill the capacitors C1, C2, and C3 one by one, so that 3.3 V voltage is accumulated on said capacitors. Meanwhile, the transistors Q4, Q5, and Q6 will be in transmission due to the voltage accumulated on the capacitors C1, C2, and C3. Since the transistors Q4, Q5, and Q6 will be in transmission, the current derived from the power supply V2 is directed through R15, R16, and R17 and the transistors Q4, Q5, and Q6 to the ground. Since the voltage produced by the power supply V2 is left on R15, R16, and R17; only the collector voltages of transistors Q4, Q5, and Q6 are seen on the "standby on/off", "panel power on/off', "backlight on/off' outputs while the duty cycle of the PWM source is 0%; and since this value shall be as high as 0.2 V, the following states will occur while the duty cycle is 0% at the port of the PWM generator V1:
"standby on/off' port: low
"panel power on/off' port: low
"backlight on/off' port: low.

### While the duty cycle is 30% at the PWM generator port V1:

With respect to this state, since transmission will occur at the inputs of transistors Q1, Q2, and Q3 for as long as 30% of a certain period, the transistors Q1, Q2, Q3 shall be open and closed, respectively, for 30% and 70% of such period while the duty cycle of the PWM generator V1 port is 30%. During the time the transistors Q1, Q2, and Q2 are closed, the voltage source V2 shall run respectively through the resistors R4-R7, R5-R8, and R6-R9 among those circuit components shown in Figure 3 and fill respectively the capacitors C1, C2, and C3; and for the 30% of the time period when the PWM source's duty cycle is activated (Q1, Q2, Q3 are open), the capacitors C1, C2, C3 shall discharge respectively through the resistors R7, R8, and R9 and the transistors Q1, Q2, and Q3, thereby a voltage around 2.5 V being generated on the capacitors C1, C2, and C3. This voltage is an adequate base voltage to keep the transistors Q5 and Q6 in transmission; however the base of the transistor Q4 has a voltage level which is in line with the ratio of resistors R13 and R10. In this state, since this voltage value is dropped below the voltage value that is required to keep open the Q4 transistor, the transistor Q4 shall also be closed. When the transistor Q4 is closed, the resistor R15 shall be open circuit, and the voltage of the power supply V2 at the output of the "standby on/off' output shall be read as 3.3 V. Since the transistors Q5 and Q6 shall be in continuous transmission, no changes shall occur on the outputs of the "panel power on/off' and "backlight on/off' to which they are connected. While the duty cycle is 30% at the PWM generator port V1, the following states shall be:
"standby on/off' port: high
"panel power on/off' port: low
"backlight on/off" port: low.

### While the duty cycle is 60% at the PWM generator port V1:

With respect to this state, since transmission will occur at the inputs of transistors Q1, Q2, and Q3 for as long as 60% of a certain period, the transistors Q1, Q2, Q3 shall be open and closed, respectively, for 60% and 40% of such period while the duty cycle of the PWM generator V1 port is 60%. During the time the transistors Q1, Q2, and Q2 are closed, the current through voltage source V2 shall run respectively through the resistors R4-R7, R5-R8, and R6-R9 among those circuit components shown in Figure 3 and fill respectively the capacitors C1, C2, and C3; and for the 60% of the time period when the duty cycle of PWM source is activated, the transistors C1, C2, C3 shall discharge respectively through the resistors R7, R8, and R9 and the transistors Q1, Q2, and Q3, thereby a voltage around 1 V is produced on the capacitors C1, C2, and C3. This voltage is an adequate base voltage to keep the transistor Q6 in transmission; the bases of the transistors Q4 and Q5, will have voltage values, which are in line with the ratio of resistors R10-R13 and R11-R14, respectively. In this state, since the voltage values are dropped below the voltage value that are required to keep transistors Q4 and Q5 open, the transistors Q4 and Q5 shall be closed. When the transistors Q4 and Q5 are closed, the resistors R15 and R16 shall be open circuit, and the voltage of the power supply V2 at the "standby on/off' and "panel power on/off' outputs shall be read as 3.3 V. Since the transistor Q6 shall be in continuous transmission, no change will occur on the "backlight on/off' output to which it is connected. While the duty cycle is 60% at the PWM generator port V1, the following states shall occur:
"standby on/off' port: high
"panel power on/off" port: high
"backlight on/off' port: low.

### While the duty cycle is 100% at the PWM generator port V1:

With respect to this state, since transmission will occur at the inputs of transistors Q1, Q2, and Q3 for as long as 100% of a certain period, the transistors Q1, Q2, Q3 shall be open and closed, respectively, for 100% and 0% of such period while the duty cycle of the PWM generator V1 port is 100%. During this time the current derived from the voltage source V2 shall run respectively through the resistors R4-R7, R5-R8, and R6-R9 among those circuit components shown in Figure 3 and energy will be stored respectively within the capacitors C1, C2, and C3; and for the 100% of the time period when the PWM source's duty cycle is activated, the transistors C1, C2, C3 shall discharge respectively through the resistors R7, R8, and R9 and the transistors Q1, Q2, and Q3, where the capacitors C1, C2, and C3 remaining at an uncharged state (0 Volt). The voltage is not adequate to open the transistors Q4, Q5, and Q6. When the transistors Q4, Q5, and Q6 are closed, the resistors R15, R16, and R17 shall be open circuit, and the voltage of the power supply V2 at the "standby on/off', "panel power on/off', and "backlight on/off' outputs shall be read as 3.3 V. While the duty cycle is 100% at the PWM generator port V1, the following states shall be:
"standby on/off" port: high
"panel power on/off' port: high
"backlight on/off' port: high.

By means of the present invention used as a port expander with a PWM source, it becomes possible to control ports which can be opened and closed in sequence. The point here is that the DC level formed by the PWM source on the circuit components does not rise/drop instantaneously. This circuit wherein the present invention is illustratively disclosed may be used in a television system -for instance, while the system is turned on in a television set, respectively the "standby on/off', "panel power on/off" and "backlight on/off' ports must be switched to the high state, and when the system is to be shut down, the "backlight on/off', "panel power on/off', and the "standby on/off' ports must respectively be switched to the low state.

The change of duty cycle of PWM source is analyzed in Figure 4; the change of the duty cycle of the PWM source according to the present invention is shown in seven different fields of Figure 4. For example, the duty cycle is adjusted to 0% at the field N° 1, wherein the "standby on/off' port is at low value, "panel power on/off' port is at low value, and the "backlight on/off" port is at low value. The duty cycle is adjusted to 30% at the field N° 2 in Figure 4, wherein the "standby on/off' port is at high value, "panel power on/off' port is at low value, and the "backlight on/off" port is at low value. The duty cycle is adjusted to 60% at the field N° 3 in Figure 4, wherein the "standby on/off' port is at high value, "panel power on/off" port is at high value, and the "backlight on/off' port is at low value. The duty cycle is adjusted to 100% at the field N° 4 in Figure 4, wherein the "standby on/off' port is at high value, "panel power on/off' port is at high value, and the "backlight on/off' port is at high value. The 5^{th} field is logically identical to the 3^{rd} field, the 6^{th} field is logically identical to the 2^{nd} field, and the 7^{th} field is logically identical to the 1^{st} field. In this exemplary embodiment of the present invention, three ports within a television set is controlled by making use of only one microprocessor port (PWM source).

By means of present invention, it becomes possible to control a plurality of ports by means of a single microprocessor port; the important point here is having the arrangements be made according to a targeted port combination.

## Claims

1. A method for controlling a plurality of ports connected to a port controller within an electronic system comprising at least one microprocessor having a port, **characterized by** comprising the following steps:
• connecting said port of said microprocessor to said port controller
• carrying a pulse width modulation (PWM) signal as a control signal, which can create a direct current (DC) level within said port controller by changing the duty cycle of the pulse width modulation (PWM) signal, over said port of said microprocessor
• controlling said port controller with said control signal by altering direct current level within said port controller and
• controlling the opening and closing sequence of said plurality of ports by altering the DC current level.

2. The method according to Claim 1, wherein said port in said microprocessor is controlled by means of a software In said microprocessor.

3. The method according to Claim 1, wherein the plurality of ports connected to said port controller is controlled in accordance with a predetermined order.

4. A port controller system for controlling a plurality of ports connected to a port controller within an electronic system comprising at least one microprocessor having a port, the port controller comprising circuit components (Q1-Q6, C1-C6, V2, R1-R17) and the port controller connected to said port of said microprocessor, **characterized in that** said port controller system comprises:
• circuit components (V2, R4, R5, R6, R7, R8. R9, C1, C2, C3) providing the generation of a level of direct current (DC) in said port controller,
• circuit components (Q1, Q2, Q3, R7, R8. R9) changing the direct current (DC) level in said port controller in accordance with the change in a control signal of said microprocessor
• circuit components (R10, R13, R11, R14) for applying said direct current (DC) to said ports at different levels,
• circuit components (Q4, Q5, Q6) for controlling the status of said ports by switching a port's voltage to high or low state in accordance with the direct current values at different levels,
wherein said microprocessor is adapted to carry a pulse width modulation (PWM) signal as said control signal, which can create a direct current (DC) level within said port controller by changing the duty cycle of the pulse width modulation (PWM) signal, over its said port to the said port controller, and wherein
the opening and closing sequence of said plurality of ports is determined by changing the values of circuit components which apply the DC current to outputs at different levels.

5. The system according to Claim 4, wherein said port is controlled by means of a software In said microprocessor,

## Patentansprüche

1. Verfahren zur Steuerung einer Mehrzahl von Anschlüssen verbunden mit einem Anschluss-Controller innerhalb eines elektronischen Systems umfassend wenigstens einen Mikroprozessor mit einem Anschluss, **gekennzeichnet durch** die folgenden Schritte:
- Verbinden des Anschlusses des Mikroprozessors mit dem Anschluss-Controller,
- Übertragen eines Pulsweitenmodulationssignals (PWM) als Steuerungssignal über den Anschluss des Mikroprozessors, das in dem Anschluss-Controller einen Gleichstrompegel (DC) erzeugen kann **durch** Ändern des Betriebszyklusses des Pulsweitenmodulationssignals (PWM),
- Steuern des Anschluss-Controllers mit dem Steuerungssignal nach Ändern des Gleichstrompegels innerhalb des Anschluss-Controllers und
- Steuern der Öffnungs- und Schließsequenz der Mehrzahl von Anschlüssen **durch** Ändern des Gleichstrompegels.

2. Verfahren nach Anspruch 1, wobei der Anschluss in dem Mikroprozessor mittels einer Software in dem Mikroprozessor gesteuert wird.

3. Verfahren nach Anspruch 1, wobei die Mehrzahl der Anschlüsse verbunden mit dem Anschluss-Controller gemäß einer festgesetzten Anweisung gesteuert wird.

4. Anschluss-Controllersystem zur Steuerung einer Mehrzahl von Anschlüssen verbunden mit einem Anschluss-Controller innerhalb eines elektronischen Systems umfassend wenigstens einen Mikroprozessor mit einem Anschluss, wobei der AnsChluss-Controller Schaltkomponenten (Q1-Q6, C1-C6,V2, R1-R17) umfasst und mit dem Anschluss des Mikroprozessors verbunden ist, **dadurch gekennzeichnet, dass** das Anschluss- Controllersystem umfasst:
- Schaltkomponenten (V2, R4, R5, R6,R7. R8, R9, C1,C2, C3),die die Erzeugung eines Gleichstrompegels (DC) in dem Anschluss-Controller bewirken,
- Schaltkomponenten (Q1,Q2, Q3, R7, R8, R9),die den Gleichstrompegel (DC) in dem Anschluss-Controllar gemäß der Änderung eines Steuerungssignalsdes Mikroprozessors ändern,
- Schaltkomponenten (R10, R13.R11, R14) zum Anlegen des Gleichstroms (DC) an die Anschlüsse bei unterschiedlichen Pegeln,
- Schaltkomponenten (Q4, Q5, Q6) zum Steuern des Status der Anschlüsse durch Schalten einer Anschiussspannung in einen Hoch- oder Niederzustand gemäß den Gleichstromwerten bei unterschiedlichen Pegeln, wobei der Mikroprozessor geeignet ist, ein Pulsweitesmodulationssignal (PWM) als Steuerungssignal zu übertragen, das einen Gleichstrompegel (DC) innerhalb des Anschluss-Controllers erzeugen kann durch Ändern des Betriebszyklusses des Pulsweitenmodulationssignals (PWM) über seinen Anschluss an den Anschluss-Controller und wobei die Öffnungs- und Schließsequenz der Mehrzahl von Anschlüssen bestimmt wird durch Änderung der Werte der Schaltkomponenten, die den Gleichstrom an Ausgänge bei unterschiedlichen Pegeln anlegen.

5. System nach Anspruch 4, wobei der Anschluss mittels einer Software in dem Mikroprozessor gesteuert wird.

## Revendications

1. Procédé pour contrôler une pluralité de ports connectés à un contrôleur de ports à l'intérieur d'un système électronique comprenant au moins un microprocesseur possédant un port, **caractérisé en ce qu'**il comprend les étapes suivantes consistant à :
- connecter ledit port dudit microprocesseur au contrôleur de ports
- transporter un signal de modulation d'impulsions en largeur (MIL) en tant que signal de contrôle, qui peut créer un niveau de courant continu (CC) à l'intérieur dudit contrôleur de ports en modifiant le cycle de travail du signal de modulation d'impulsions en largeur (MIL), sur ledit port dudit microprocesseur
- contrôler ledit contrôleur de ports avec ledit signal de contrôle en modifiant le niveau de courant continu à l'intérieur dudit contrôleur de ports, et
- contrôler la séquence d'ouverture et de fermeture de ladite pluralité de ports en modifiant le niveau de courant continu.

2. Procédé selon la revendication 1, dans lequel ledit port dans ledit microprocesseur est contrôlé au moyen d'un logiciel dans ledit microprocesseur.

3. Procédé selon la revendication 1, dans lequel la pluralité de ports connectés audit contrôleur de ports est contrôlée selon un ordre prédéterminé.

4. Système de contrôleur de ports pour contrôler une pluralité de ports connectés à un contrôleur de ports à l'intérieur d'un système électronique comprenant au moins un microprocesseur comportant un port, le contrôleur de ports comprenant des composants de circuit (Q1-Q6, C1-C6, V2, R1-R17) et le contrôleur de ports connecté audit port dudit microprocesseur ; **caractérisé en ce que** ledit système de contrôleur de ports comprend :
- des composants de circuit (V2, R4, R5, R6, R7, R8, R9, C1, C2, C3) fournissant la génération d'un niveau de courant continu (CC) dans ledit contrôleur de ports,
- des composants de circuit (Q1, Q2, Q3, R7, R8, R9) changeant le niveau de courant continu (CC) dans ledit contrôleur de ports en fonction du changement d'un signal de contrôle dudit microprocesseur,
- des composants de circuit (R10, R13, R11, R14) pour appliquer ledit courant continu (CC) auxdits ports à différents niveaux,
- des composants de circuit (Q4, Q5, Q6) pour contrôler l'état desdits ports en commutant la tension d'un port à un niveau haut ou bas en fonction des valeurs de courant continu à différents niveaux,
dans lequel ledit microprocesseur est conçu pour transporter un signal de modulation d'impulsions en largeur (MIL) en tant que ledit signal de contrôle, qui peut créer un niveau de courant continu (CC) à l'intérieur dudit contrôleur de ports en changeant le cycle de travail du signal de modulation d'impulsions en largeur (MIL), sur son dit port vers ledit contrôleur de ports, et dans lequel
la séquence d'ouverture et de fermeture de ladite pluralité de ports est déterminée en changeant les valeurs des composants de circuit qui appliquent le courant continu aux sorties à différents niveaux.

5. Système selon la revendication 4, dans lequel ledit port est contrôlé au moyen d'un logiciel dans ledit microprocesseur.
